(19)

Europäisches Patentamt
European Patent Office
Office européen des brevets

(11) **EP 4 303 264 A1**

(12) **EUROPEAN PATENT APPLICATION**
published in accordance with Art. 153(4) EPC

(43) Date of publication:
**10.01.2024 Bulletin 2024/02**

(21) Application number: **22763347.6**

(22) Date of filing: **02.03.2022**

(51) International Patent Classification (IPC):
$C08L\ 23/26^{(2006.01)}$   $C08L\ 23/28^{(2006.01)}$
$C08L\ 71/02^{(2006.01)}$   $C09D\ 7/63^{(2018.01)}$
$C09D\ 123/26^{(2006.01)}$   $C09D\ 123/28^{(2006.01)}$
$C09J\ 11/06^{(2006.01)}$   $C09J\ 123/26^{(2006.01)}$
$C09J\ 123/28^{(2006.01)}$

(52) Cooperative Patent Classification (CPC):
**C08L 23/26; C08L 23/28; C08L 71/02; C09D 7/63;
C09D 123/26; C09D 123/28; C09J 11/06;
C09J 123/26; C09J 123/28**

(86) International application number:
**PCT/JP2022/008954**

(87) International publication number:
**WO 2022/186294 (09.09.2022 Gazette 2022/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.03.2021 JP 2021034769**

(71) Applicant: **TOYOBO MC Corporation
Osaka 530-0001 (JP)**

(72) Inventors:
• **YAMANE, Atsushi**
  **Takasago-shi, Hyogo 676-0082 (JP)**
• **KASHIHARA, Kenji**
  **Takasago-shi, Hyogo 676-0082 (JP)**
• **MIYAZAKI, Keitaro**
  **Takasago-shi, Hyogo 676-0082 (JP)**

(74) Representative: **Vossius & Partner
Patentanwälte Rechtsanwälte mbB
Siebertstrasse 3
81675 München (DE)**

(54) **AQUEOUS DISPERSION**

(57)   To solve the problems described herein, this invention provides a resin emulsion for primers capable of suitably controlling sagging when a base coating is applied and capable of obtaining a smooth appearance in aqueous paint systems for plastics. The invention provides an aqueous dispersion comprising an acid-modified polyolefin resin (A), a nitrogen-containing non-ionic emulsifier (B), and water, wherein the acid-modified polyolefin resin (A) is a propylene-$\alpha$-olefin copolymer having a butene content of 2 to 35 mass% in a polyolefin component, and wherein a coating film after baking at 80°C has a pure water contact angle of 40° to 90°.

**EP 4 303 264 A1**

## Description

Technical Field

The present invention relates to a modified polyolefin aqueous dispersion capable of suppressing the occurrence of bleeding out after preheating, and providing a smooth coating film with excellent appearance without paint defects such as sagging and slippage of the base coating, when the aqueous dispersion is used as a primer for polypropylene substrates.

Background Art

With the global trend toward environmental protection, the entire paint industry is actively working to reduce $CO_2$ emissions, which cause global warming, by reducing VOCs in paints and reducing energy consumption in baking and drying furnaces. In automobile painting lines as well, aqueous paints and low-VOC paints are increasingly used for each layer.

In the field of intermediate coating and base coating of automobile paints, high designability is required. At the same time, quality requirements are also increasing in terms of chipping resistance for protection from the hitting of flying stones such as gravel stones. Accordingly, coating films with excellent workability and excellent smoothness are currently in demand.

On the other hand, low-polarity, difficult-to-adhere plastic substrates, such as polypropylene substrates, like bumpers, are coated with a conductive primer in which a non-polar resin, such as an acid-modified polyolefin or chlorinated acid-modified polyolefin, is used as a binder. Aqueous paint systems for bumpers usually comprise a process of forming a laminated coating film consisting of an aqueous primer, an aqueous base coating, and a clear coating in this order.

In aqueous paint systems, smoothness is less satisfactory than in solvent-based paint systems. Further, in aqueous paint systems, since a small amount of an organic solvent is blended to improve wettability, a problem lies in achieving all of excellent smoothness, reduced sagging, and excellent dispersion stability. Patent Literature (PTL) 1 discloses that a coating film with reduced sagging, excellent smoothness, and excellent storage stability can be provided by incorporating a water-dispersible acrylic copolymer and internally non-crosslinked acrylic fine particles in amounts within specific ranges into a base coating.

PTL 2 discloses that excellent water dispersibility and dispersion stability are maintained even in the presence of an alcohol and an ether by adding a nitrogen-containing polyoxyalkylene derivative to an aqueous dispersant.

Citation List

Patent Literature

PTL 1: JP3435469B
PTL 2: WO2010/018863

Summary of Invention

Technical Problem

However, the results of the study of the present inventors revealed the following. In the paint systems for bumper plastics mentioned above, even when the formulation of the aqueous base coating disclosed in PTL 1 is used, sagging is likely to occur due to bleeding out of the low-molecular components of the primer when the base coating is applied after preheating after primer application. In particular, an increase in the preheating temperature causes a defect in terms of slipping off of the entire base coating; thus, solving problems with the base coating alone is difficult. The results of the study of the present inventors also clarified the following. Even when the aqueous dispersion disclosed in PTL 2 is blended with a primer, slippage and sagging are not sufficiently prevented although excellent dispersion stability is achieved.

In view of the above circumstances, an object of the present invention is to provide a resin emulsion for primers capable of suitably controlling slippage and sagging when a base coating is applied and obtaining a smooth appearance in aqueous paint systems for plastics.

Solution to Problem

As a result of extensive study, the present inventors found that the use of an aqueous dispersion that contains a specific compound and has a specific pure water contact angle at a baking temperature of 80°C as an olefin-based aqueous binder in a primer prevents sagging and slippage in a vertical plane in an excellent matter, and achieves excellent smoothness, when a base coating is applied in preheating at a high temperature. The present invention has thus been accomplished.

More specifically, the present invention provides an aqueous dispersion comprising a polyolefin resin (A), in which a polyolefin having a butene component content in the range of 2 to 35 mass% is acid-modified, a nitrogen-containing non-ionic emulsifier (B), and water, wherein a coating film after baking at 80°C has a pure water contact angle of 40° to 90°.

The acid-modified polyolefin resin (A) preferably has a weight average molecular weight of 50,000 to 150,000 and is preferably chlorinated.

The nitrogen-containing non-ionic emulsifier (B) preferably has an ethylene oxide structure, and the number of moles of ethylene oxide (the number of ethylene oxide units per molecule) is preferably 10 or more and 30 or less.

The nitrogen-containing non-ionic emulsifier (B) preferably has a structure in which an alkyl group is present, and the number of carbon atoms in the alkyl is preferably 10 or more.

The aqueous dispersion preferably has a Z-average particle size in the range of 80 nm to 250 nm. The aqueous dispersion is applicable to paints, automotive paints, primers, or adhesives.

Advantageous Effects of Invention

The aqueous dispersion composition according to the present invention when used as a primer for polypropylene substrates is capable of suppressing bleeding out after preheating, and providing a smooth coating film having excellent appearance without paint defects such as sagging and slippage of a base coating.

Description of Embodiments

Below, embodiments of the present invention are described in detail.

The aqueous dispersion of the present invention comprises an acid-modified polyolefin resin (A), a nitrogen-containing non-ionic emulsifier (B), and water, wherein the acid-modified polyolefin resin (A) is a propylene-$\alpha$-olefin copolymer having a butene content of 2 to 35 mass% in a polyolefin component.

Modified Polyolefin (A)

The acid-modified polyolefin resin (A) for use in the present invention is a polyolefin in which a propylene-$\alpha$-olefin copolymer having a 1-butene content of 2 to 35 mass% is acid-modified. The modified polyolefin (A) is preferably an acid-modified polyolefin or an acid-modified chlorinated polyolefin.

Acid-modified Polyolefin

Examples of the acid component of the acid-modified polyolefin for use in the present invention include $\alpha,\beta$-unsaturated carboxylic acids and acid anhydrides thereof. The acid-modified polyolefin is preferably one obtained by grafting at least one of an $\alpha,\beta$-unsaturated carboxylic acid and an acid anhydride thereof onto a propylene-$\alpha$-olefin copolymer having a 1-butene content of 2 to 35 mass% in the olefin component.

The propylene-$\alpha$-olefin copolymer is a copolymer containing propylene and an $\alpha$-olefin as copolymerization components. The propylene-$\alpha$-olefin copolymer is preferably a propylene-1-butene copolymer or one mainly comprising propylene-1-butene that is copolymerized with an $\alpha$-olefin. Examples of $\alpha$-olefins other than propylene and butene include ethylene, isobutene, 1-pentene, 3-methyl-1-pentene, 1-hexene, 1-heptene, 1-octene, 4-methyl-1-pentene, and vinyl acetate. These may be used singly or in a combination of two or more. Among these $\alpha$-olefins, ethylene is preferred.

In the propylene-$\alpha$-olefin copolymer, the propylene component is preferably 50 mass% or more, more preferably 60 mass% or more, and particularly preferably 65 mass% or more. When the amount of the propylene component is within these ranges, excellent adhesiveness and adhesion to propylene substrates and other polyolefin substrates can be achieved. The 1-butene component in the olefin component is 2 to 35 mass%, preferably 3 to 33 mass%, and particularly preferably 5 to 31 mass%. When the 1-butene component in the olefin component is within these ranges, bleeding out of the emulsifier component is less likely to occur, the water contact angle is in a suitable range, and excellent paint workability against slippage can be obtained.

Examples of the at least one of an $\alpha,\beta$-unsaturated carboxylic acid and an acid anhydride thereof include maleic acid, itaconic acid, citraconic acid, and acid anhydrides thereof. Among these, acid anhydrides are preferred, and maleic anhydride is more preferred. Specific examples of acid-modified polyolefins include maleic anhydride-modified propylene-butene copolymers and maleic anhydride-modified propylene-ethylene-butene copolymers. These acid-modified polyolefins may be used singly or in a combination of two or more.

The method for producing the acid-modified polyolefin is not limited. Examples of the method include a radical grafting reaction (in which a radical species is formed in a polymer serving as a main chain, onto which an unsaturated carboxylic acid and acid anhydride are graft-polymerized using the radical species as a polymerization starting point).

Examples of radical generators include, but are not limited to, organic peroxides and azonitriles. It is preferred to use an organic peroxide. Examples of organic peroxides include, but are not limited to, di-tert-butylperoxy phthalate, tert-butyl hydroperoxide, dicumyl peroxide, benzoyl peroxide, tert-butylperoxy benzoate, tert-butyl peroxy-2-ethylhexanoate, tert-butyl peroxy pivalate, methyl ethyl ketone peroxide, di-tert-butyl peroxide, and lauroyl peroxide. Examples of azonitriles include azobisisobutyronitrile and azobisisopropionitrile.

The amount of acid modification in the acid-modified polyolefin is preferably 0.1 mass% or more, more preferably 0.3 mass% or more, and particularly preferably 0.5 mass% or more. The amount is preferably 10 mass% or less, more preferably 8 mass% or less, and particularly preferably 7 mass% or less. From the viewpoint of achieving a suitable water contact angle, the amount is still more preferably 1.5 mass% or less. An amount of 0.1 mass% or more is likely to achieve excellent dispersibility in water, and an amount of 10 mass% or less is likely to achieve excellent water resistance of the coating film.

The weight average molecular weight (Mw) of the modified polyolefin (A) is preferably in the range of 50,000 to 150,000, more preferably 60,000 to 115,000, still more preferably 70,000 to 110,000, particularly preferably 75,000 to 105,000, and most preferably 80,000 to 100,000. A weight average molecular weight of 40,000 or more tends to achieve a strong cohesive force and excellent adhesiveness. On the other hand, a weight average molecular weight of 120,000 or less tends to achieve excellent solubility, making it easy to prepare an aqueous dispersion composition.

The weight average molecular weight in the present invention is a value measured with an Alliance e2695 gel permeation chromatograph (also referred to below as "GPC"; standard substance: polystyrene resin, mobile phase: tetrahydrofuran, column: Shodex KF-806 and KF-803, column temperature: 40°C, flow rate: 1.0 ml/min, detector: photodiode array detector (wavelength 254 nm = ultraviolet light)), produced by Nihon Waters K.K.

The modified polyolefin (A) is preferably crystalline. Crystalline polyolefins are advantageous since they are superior in cohesive force, adhesiveness, water resistance, heat resistance, and chemical resistance, to amorphous polyolefins.

Crystalline polyolefins as used herein refer to those that show a clear melting peak during heating from -100°C to 250°C at 10°C/min using a differential scanning calorimeter (also referred to below as "DSC"; Q-2000 produced by TA Instruments Japan Inc.). The melting point and heat enthalpy are values measured with the DSC from the top temperature and area of the melting peak when melting by heating at a rate of 10°C/min and resinification by cooling are performed, and melting by heating is again performed.

The melting point (Tm) of the modified polyolefin (A) is preferably 50°C or higher, more preferably 60°C or higher, still more preferably 70°C or higher, and particularly preferably 75°C or higher. The melting point is preferably 120°C or lower, more preferably 100°C or lower, and still more preferably 90°C or lower. When the melting point is 50°C or higher, strong cohesive force derived from crystals, as well as better adhesiveness, water resistance, heat resistance, and chemical resistance are achieved. On the other hand, when the melting point is 120°C or lower, excellent solubility is achieved, making it easy to form an aqueous dispersion composition.

Acid-modified Chlorinated Polyolefin

The modified polyolefin (A) for use in the present invention is not limited and may be chlorinated. The chlorinated polyolefin is preferably an acid-modified chlorinated polyolefin obtained by chlorinating the acid-modified polyolefin described above.

The method for producing the acid-modified chlorinated polyolefin is not limited. For example, the acid-modified chlorinated polyolefin can be obtained by dissolving the acid-modified polyolefin described above in a halogenated hydrocarbon, such as chloroform, and introducing chlorine.

From the viewpoint of the solution stability and adhesiveness between polyolefin substrates and resin substrates or metal substrates, when the modified polyolefin (A) is an acid-modified chlorinated polyolefin, the lower limit of the chlorine content in the acid-modified chlorinated polyolefin is preferably 5 mass% or more, more preferably 8 mass% or more, still more preferably 10 mass% or more, and particularly preferably 12 mass% or more. A chlorine content of 5 mass% or more achieves excellent solution stability, making emulsification easy. The upper limit is preferably 40 mass% or less, more preferably 38 mass% or less, still more preferably 35 mass% or less, and particularly preferably 30 mass% or less. A chlorine content of 40 mass% or less tends to increase the crystallinity of the acid-modified chlorinated polyolefin and achieve stronger adhesiveness.

The chlorine content in the acid-modified chlorinated polyolefin can be measured by titration in accordance with JIS K-7229-1995.

Nitrogen-containing Non-ionic Emulsifier (B)

The emulsifier (B) contained in the aqueous dispersion of the present invention is a nitrogen-containing non-ionic emulsifier. Examples of the nitrogen-containing non-ionic surfactants include polyoxyalkylene alkylamine surfactants, such as polyoxyethylene laurylamine, polyoxyethylene stearylamine, polyoxyethylene coco amine, and polyoxyethylene beef tallow amine;

polyoxyalkylene amine surfactants, such as polyoxyethylene polyoxypropylene monoamine; and polyoxyalkylene alkylamide surfactants, such as polyoxyethylene oleylamide, polyoxyethylene coco fatty acid amide, polyoxyethylene laurylamide, polyoxyethylene stearylamide, polyoxyethylene beef tallow amide, polyoxyethylene coco fatty acid monoethanolamide, and polyoxyethylene lauryl monoethanolamide.

Among these polyoxyalkylene alkylamine surfactants, polyoxyethylene beef tallow amine is preferred since it has a suitable contact angle, slippage is prevented, and storage stability is excellent. Among polyoxyethylene alkylamide surfactants, polyoxyethylene laurylamide is preferred since it has a suitable contact angle, slippage is prevented, and storage stability is excellent. These may be used singly or in a combination of two or more. The emulsifier preferably has a polyoxyethylene structure. In particular, the emulsifier preferably has a polyoxyethylene structure and does not have a polyoxypropylene structure from the viewpoint of achieving a suitable water contact angle and suppressed slippage.

The nitrogen-containing non-ionic emulsifier (B) preferably has a structure in which an alkyl group having 10 or more carbon atoms is present. The number of carbon atoms is preferably 12 or more. When the number of carbon atoms is within these ranges, a suitable water contact angle is achieved, excellent paint workability against slippage is obtained, and excellent water resistance is obtained.

In the nitrogen-containing non-ionic emulsifier (B), the number of moles of ethylene oxide (EO) (the number of ethylene oxide units per molecule) is preferably in the range of 10 to 30, more preferably 12 to 28, and particularly preferably 13 to 25. When the number of moles is in the range of 10 to 30, water dispersibility in emulsification is stabilized, a suitable water contact angle is achieved, and excellent paint workability is obtained.

The nitrogen-containing non-ionic emulsifier (B) is preferably contained in an amount of 1 part by mass or more, more preferably 2 parts by mass or more, still more preferably 3 parts by mass or more, particularly preferably 4 parts by mass or more, and most preferably 5 parts by mass or more, per 100 parts by mass of the modified polyolefin resin (A). Further, the amount is preferably 30 parts by mass or less, more preferably 28 parts by mass or less, still more preferably 25 parts by mass or less, particularly preferably 22 parts by mass or less, and most preferably 20 parts by mass or less. When the amount is 1 part by mass or more, emulsification tends to be easy; and when the amount is 30 parts by mass or less, the coating film tends to have excellent water resistance.

The method of blending the nitrogen-containing non-ionic emulsifier (B) is not limited. For example, the nitrogen-containing non-ionic emulsifier (B) may be blended without diluting in water etc., or may be blended in the form of an aqueous solution by diluting it to 1 to 50 mass%. In order to promptly mix with the aqueous dispersion composition, the nitrogen-containing non-ionic emulsifier (B) is preferably blended in the form of an aqueous solution by diluting it to 1 to 50 mass%. By blending the emulsifier in the form of an aqueous solution with the aqueous dispersion composition, the emulsifier is quickly adsorbed onto the particles.

The aqueous dispersion comprising the modified polyolefin resin (A) preferably has a pure water contact angle after film formation at 80°C of 40° or more, more preferably 45° or more, and particularly preferably 50° or more. The pure water contact angle is preferably 90° or less, more preferably 85° or less, and particularly preferably 80° or less. When the pure water contact angle is 40° or more, slippage is less likely to occur in the drying process after application of a base coating and clear coating; and when the pure water contact angle is 90° or less, excellent wettability is easily obtained when a base coating is applied.

The Z-average particle size of the aqueous dispersion comprising the modified polyolefin resin (A) is preferably 80 nm or more, more preferably 85 nm or more, and still more preferably 90 nm or more. The Z-average particle size is preferably 250 nm or less, more preferably 230 nm or less, and still more preferably 200 nm or less. When the Z-average particle size is 80 nm or more, the aqueous dispersion has excellent storage stability; and when the Z-average particle size is 250 nm or less, the wettability with respect to substrates tends to improve, and adhesion to substrates tends to be excellent.

The viscosity of the aqueous dispersion comprising the modified polyolefin resin (A) is preferably 5 mPa•s or more, and more preferably 10 mPa•s or more. The viscosity is preferably 300 mPa•s or less, and more preferably 250 mPa•s or less. The pH of the aqueous dispersion of the present invention is preferably 5 or more and 10 or less, more preferably 7 or more, particularly preferably 8.3 or more, and still more preferably 8.5 or more.

The aqueous dispersion of the present invention can also be used as an adhesive. The aqueous dispersion of the present invention can be mixed with a pigment dispersion to obtain a paint, which can also be used as a paint for automobiles. The production method for the aqueous dispersion is not limited. Examples of the production method include the following. Specifically, the aqueous dispersion can be obtained by dissolving the modified polyolefin (A) and the emulsifier (B) in one or more solvents selected from the group consisting of ether solvents, alcohol solvents, and aromatic solvents, and water; adding a basic substance; cooling the mixture; and then removing the solvents.

Examples of ether solvents include, but are not limited to, tetrahydrofuran (also referred to below as "THF"), propylene glycol monomethyl ether, propylene glycol monoethyl ether, and propylene glycol monopropyl ether. These can be used singly or in a combination of two or more.

Examples of alcohol solvents include, but are not limited to, aliphatic alcohols having 1 to 7 carbon atoms, aromatic alcohols, and alicyclic alcohols. These can be used singly or in a combination of two or more.

Examples of aromatic solvents include benzene, toluene, xylene, ethylbenzene, isopropyl benzene, and solvent naphtha. These can be used singly or in a combination of two or more.

The amounts of the solvents and water for use can be selected as appropriate. The ratio of the modified polyolefin (A):water:solvent is preferably 100:50 to 800:11 to 900 (on a mass basis), and the ratio is more preferably 100:200 to 400:43 to 233 (on a mass basis).

The basic substance is not limited. Preferred are volatile basic substances, and particularly preferred are ammonia and amines. Examples of amines include, but are not limited to, monomethylamine, dimethylamine, trimethylamine, monoethylamine, mono-n-propylamine, dimethyl-n-propylamine, monoethanolamine, diethanolamine, triethanolamine, N-methylethanolamine, N-aminoethylethanolamine, N-methyldiethanolamine, monoisopropanolamine, diisopropanolamine, triisopropanolamine, N,N-dimethylethanolamine, and N,N-dimethylpropanolamine. Particularly preferred are triethylamine and N,N-dimethylethanolamine. These volatile amines can be used singly or in a combination of two or more.

The basic substance is preferably used in an amount of 0.5 parts by mass or more, more preferably 1 part by mass or more, and still more preferably 2 parts by mass or more, per 100 parts by mass of the modified polyolefin resin (A). The amount is preferably 10 parts by mass or less, more preferable 9 parts by mass or less, still more preferably 8 parts by mass or less, and particularly preferably 7 parts by mass or less. When the amount is 0.5 parts by mass or more and 10 parts by mass or less, the storage stability is particularly excellent without an excessive increase in the particle size of the dispersed particles.

Additionally, in order to further improve the performance of the aqueous dispersion of the present invention, such as water resistance and solvent resistance, a curing agent may be blended as needed. Examples of curing agents include, but are not limited to, aqueous polyfunctional carbodiimide resins, aqueous dispersions of polyfunctional isocyanate compounds, aqueous polyfunctional oxazoline resins, water-soluble silane coupling agents containing polyfunctional silyl groups, and aqueous melamine compounds. These curing agents are preferably blended in an amount of 2 to 30 parts by mass per 100 parts by mass of the resin in the aqueous dispersion composition of the present invention.

The aqueous dispersion of the present invention may further comprise various additives, such as fillers, pigments, colorants, antioxidants, and the like, to the extent that they do not impair the effects of the present invention. The amount of these additives is preferably 150 parts by mass or less, more preferably 140 parts by mass or less, and still more preferably 130 parts by mass or less, per 100 parts by mass of the resin in the aqueous dispersion composition. The amount is preferably 5 parts by mass or more, and more preferably 2 parts by mass or more. When the amount is within the above ranges, excellent effects of the present invention are produced.

The present invention is described in detail below with reference to Examples. However, the present invention is not limited to these Examples. In the Examples and Comparative Examples, the simple expression "part" indicates "parts by mass." The following are the measurement and evaluation methods used in the present invention.

1) Measurement of Solids Concentration of Aqueous Dispersion

A sample (about 1 g) of an aqueous dispersion was precisely weighed in a 50-ml glass weighing bottle. The weighing bottle containing the sample was then dried in a hot air dryer at 120°C for 2 hours. The weighing bottle removed from the dryer was placed in a desiccator and allowed to stand and cooled at room temperature for 30 minutes. The weighing bottle was removed from the desiccator, the mass was precisely weighed, and the mass% of the solids concentration of the aqueous dispersion was calculated from the weight change before and after hot air drying (formula below).

```
Aqueous dispersion solids concentration (mass%) = 100 - [(the
sample mass before hot air drying) - (the sample mass after hot
air drying)]/(the sample mass before hot air drying) x 100
```

2) Measurement of Viscosity of Aqueous Dispersion

A sample (0.6 g) was subjected to measurement using a Viscometer TV-22 (E-type viscometer) produced by Toki Sangyo Co., Ltd., under the conditions of rotor: No. 0.8° (= 48') × R24, range: H, rotation number: 5 rpm, and temperature: 25°C.

3) Measurement of pH of Aqueous Dispersion

The pH value was measured at 25°C using an F-52 pH meter produced by Horiba, Ltd. Calibration of the measuring device was performed by 3-point measurement using a phthalate pH standard solution (pH: 4.01), a neutral phosphate pH standard solution (pH: 6.86), and a borate pH standard solution (pH: 9.18), produced by FUJIFILM Wako Pure Chemical Corporation.

4) Measurement of Average Particle Size (Z-average Particle Size) of Aqueous Dispersion

The average particle size (Z-average particle size) was measured based on intensity distribution by a dynamic light scattering method with a Zetasizer Nano-ZS, Model ZEN3600, produced by Malvern Panalytical. The measurement was performed three times at 25°C using a sample obtained by adjusting the solids content of the aqueous dispersion composition to a concentration of 0.05 g/L to obtain the average value.

5) Measurement of Acid Modification Amount

The amount of acid modification in the case of acid modification with maleic anhydride can be determined by FT-IR (FT-IR8200PC produced by Shimadzu Corporation). First, a calibration solution was prepared by dissolving maleic anhydride at a predetermined concentration. The calibration solution was subjected to FT-IR measurement to create a calibration curve using an absorbance of the stretching peak (1780 cm$^{-1}$) of the carbonyl bond (C=O) in maleic anhydride. The modified polyolefin (A) was dissolved in chloroform and subjected to FT-IR measurement, and the amount of acid modification with maleic anhydride was determined using the absorbance of the stretching peak (1780 cm$^{-1}$) of the carbonyl bond in maleic anhydride based on the above calibration curve.

6) Measurement of Melting Point

The melting point and heat enthalpy in the present invention are values measured with a differential scanning calorimeter (referred to below as "DSC"; Q-2000 produced by TA Instruments Japan Inc.) from the top temperature of the melting peak when a sample was melted by heating at a rate of 10°C/min, cooled to achieve resinification, and melted again by heating.

7) Measurement of Glass Transition Temperature

The glass transition temperature (Tg) (°C) of the resin was defined as the temperature at the intersection of a straight line equidistant in the vertical axis direction from the straight lines extending from each baseline in the process in which the temperature was increased again, and the curve at a stepwise change in glass transition, under the same conditions as for the measurement of the melting point with a DSC.

The formulations of the aqueous dispersions used in the following Examples and Comparative Examples are shown in Table 1.

Production Example 1: Production of Modified Polyolefin (A-1)

100 parts by mass of a propylene-butene copolymer (propylene/butene = 75/25 mass%) as a polyolefin, 300 parts by mass of toluene, and 10 parts by mass of maleic anhydride were placed in a 1-L autoclave. After the mixture was heated to 130°C, 8 parts by mass of di-tert-butyl peroxide was added thereto and stirred for 1 hour. Thereafter, the resulting reaction liquid was cooled and then poured into a container containing a large amount of methyl ethyl ketone, and the resin was precipitated. The liquid containing the resin was then centrifuged to separate and purify an acid-modified propylene-butene copolymer onto which maleic anhydride was graft-polymerized from ungrafted maleic anhydrides and low-molecular-weight materials. Subsequently, drying was performed under reduced pressure at 70°C for 5 hours to thus obtain a maleic anhydride-modified propylene-butene copolymer (A-1, maleic anhydride-modified amount: 1.0 mass%, weight average molecular weight: 90,000, melting point: 82°C).

Production Example 2: Production of Modified Polyolefin (A-2)

100 parts by mass of a propylene-butene-ethylene ternary copolymer (propylene/butene/ethylene = 94/3/3 mass%) as a polyolefin, 300 parts by mass of toluene, and 10 parts by mass of maleic anhydride were placed in a 1-L autoclave. After the mixture was heated to 130°C, 8 parts by mass of di-tert-butyl peroxide was added thereto and stirred for 1 hour. Thereafter, the resulting reaction liquid was cooled and then poured into a container containing a large amount of methyl ethyl ketone, and the resin was precipitated. The liquid containing the resin was then centrifuged to separate and purify an acid-modified polypropylene onto which maleic anhydride was graft-polymerized from ungrafted maleic anhydrides and low-molecular-weight materials. Subsequently, drying was performed under reduced pressure at 70°C for 5 hours to obtain a maleic anhydride-modified polypropylene. Next, 100 parts by mass of the resulting maleic anhydride-modified polypropylene and 1700 parts by mass of chloroform were placed in a 2-L glass-lined reaction vessel, and the reaction vessel was sealed. The liquid in the reaction vessel was heated while stirring and dispersing to achieve dissolution at an internal temperature of the vessel of 120°C for 1 hour. After the internal temperature of the vessel was cooled to 110°C, 0.5 parts by mass of t-butylperoxy-2-ethylhexanoate was added, and 70 parts by mass of chlorine was introduced. After the internal temperature of the vessel was cooled to 60°C, and 1400 parts by mass of chloroform was distilled off, 4 parts by mass of p-t-butylphenyl glycidyl ether was added as a stabilizer. Subsequently, drying was performed to thus obtain a maleic anhydride-modified chlorinated polypropylene (A-2, maleic anhydride-modified amount: 1.0 mass%, chlorine content: 17 mass%, weight average molecular weight: 110,000, melting point: 85°C).

Production Example 3: Production of Modified Polyolefin (A-3)

100 parts by mass of a propylene homopolymer as a polyolefin, 300 parts by mass of toluene, and 10 parts by mass of maleic anhydride were placed in a 1-L autoclave. After the mixture was heated to 130°C, 8 parts by mass of di-tert-butyl peroxide was added thereto and stirred for 1 hour. Thereafter, the resulting reaction liquid was cooled and then poured into a container containing a large amount of methyl ethyl ketone, and the resin was precipitated. The liquid containing the resin was then centrifuged to separate and purify an acid-modified polypropylene onto which maleic anhydride was graft-polymerized from ungrafted maleic anhydrides and low-molecular-weight materials. Subsequently, drying was performed under reduced pressure at 70°C for 5 hours to obtain a maleic anhydride-modified polypropylene. Next, 100 parts by mass of the resulting maleic anhydride-modified polypropylene and 1,700 parts by mass of chloroform were placed in a 2-L glass-lined reaction vessel, and the reaction vessel was sealed. The liquid in the reaction vessel was heated while stirring and dispersing to achieve dissolution at an internal temperature of the vessel of 120°C for 1 hour. After the internal temperature of the vessel was cooled to 110°C, 0.5 parts by mass of t-butylperoxy-2-ethylhexanoate was added, and 70 parts by mass of chlorine was introduced. After the internal temperature of the vessel was cooled to 60°C, and 1400 parts by mass of chloroform was distilled off, 4 parts by mass of p-t-butylphenyl glycidyl ether was added as a stabilizer. Subsequently, drying was performed to obtain maleic anhydride-modified chlorinated polypropylene (A-3, maleic anhydride-modified amount: 1.0 mass%, chlorine content: 20 mass%, weight average molecular weight: 90,000, melting point: 80°C).

Production Example 4: Production of Aqueous Dispersion (a1-1)

100 parts by mass of the modified polyolefin (A-1), 15 parts by mass of polyoxyethylene laurylamine in which the number of moles of EO added was 10 as an emulsifier, 300 parts by mass of ion-exchanged water, 20 parts by mass of tetrahydrofuran, and 60 parts by mass of toluene were placed in a flask equipped with a stirrer. The mixture was heated to 100°C and then dissolved by heating at the same temperature for 1 hour. Next, 1.5 parts by mass of N,N-dimethylethanolamine was added, and the mixture was stirred at the same temperature for 1 hour. Subsequently, the mixture was gradually cooled to 40°C over 1 hour, and the organic solvent was distilled off under a reduced pressure of 91 kPa. A white cloudy maleic anhydride-modified polyolefin aqueous dispersion (a1-1) was thus obtained. The aqueous dispersion (a1-1) had a solids concentration of 30 mass%, a viscosity of 90 mPa·s at 25°C, a pH of 9.1, and an average particle size of 150 nm.

Production Examples 5 to 10

The aqueous dispersions of Production Examples 5 to 10 listed in Table 1 were obtained in the same manner as in Production Example 4, except that the emulsifier was changed for each Production Example.

Production Example 11 and Production Example 12

The aqueous dispersions of Production Examples 11 and 12 listed in Table 1 were obtained in the same manner as in Production Example 4, except that the emulsifier was changed for each Production Example, and the amount of each emulsifier added was changed to 20 parts by mass.

Production Example 13

The aqueous dispersion of Production Example 13 listed in Table 1 was obtained in the same manner as in Production Example 4, except that the emulsifier was changed.

Table 1

| | Production Example | Modified olefin | Aqueous dispersion | Type of emulsifier | | Properties and state of aqueous dispersion | | | | |
|---|---|---|---|---|---|---|---|---|---|---|
| | | | | Emulsifier | Number of moles of EO | Solids content | Viscosity | pH | Particle size |
| Ex. 1 | Prod. Ex. 4 | A-1 | a1-1 | Polyoxyethylene laurylamine | 10 | 30 | 90 | 9.1 | 150 |
| Ex. 2 | Prod. Ex. 5 | A-1 | a1-2 | Polyoxyethylene laurylamine | 15 | 30 | 90 | 9.0 | 159 |
| Ex. 3 | Prod. Ex. 6 | A-1 | a1-3 | Polyoxyethylene laurylamine | 30 | 30 | 40 | 8.9 | 164 |
| Ex. 4 | Prod. Ex. 7 | A-1 | a1-4 | Polyoxyethylene stearylamine | 15 | 30 | 125 | 9.1 | 140 |
| Ex. 5 | Prod. Ex. 8 | A-1 | a1-5 | Polyoxyethylene stearylamine | 20 | 30 | 45 | 9.1 | 131 |
| Ex. 6 | Prod. Ex. 9 | A-1 | a1-6 | Polyoxyethylene oleylamine | 15 | 30 | 89 | 9.1 | 155 |
| Ex. 7 | Prod. Ex. 10 | A-1 | a1-7 | Polyoxyethylene lauryl monoethanolamide | 10 | 30 | 102 | 9.3 | 149 |
| Comp.Ex. 1 | Prod. Ex. 11 | A-1 | a1-8 | Polyoxyethylene laurylamine | 7 | 30 | 48 | 8.9 | 154 |
| Comp.Ex. 2 | Prod. Ex. 12 | A-1 | a1-9 | Polyoxyethylene stearylamine | 7 | 30 | 110 | 9.0 | 138 |
| Comp.Ex. 3 | Prod. Ex. 13 | A-1 | a1-10 | Polyoxyethylene ethylhexylether | 30 | 30 | 102 | 8.8 | 158 |
| Ex. 8 | Prod. Ex. 14 | A-2 | a2-1 | Polyoxyethylene laurylamine | 10 | 30 | 94 | 9.2 | 142 |
| Ex. 9 | Prod. Ex. 15 | A-2 | a2-2 | Polyoxyethylene laurylamine | 15 | 30 | 18 | 9.1 | 112 |
| Ex. 10 | Prod. Ex. 16 | A-2 | a2-3 | Polyoxyethylene laurylamine | 30 | 30 | 20 | 9.1 | 143 |
| Ex. 11 | Prod. Ex. 17 | A-2 | a2-4 | Polyoxyethylene stearylamine | 15 | 30 | 19 | 9.1 | 152 |
| Ex. 12 | Prod. Ex. 18 | A-2 | a2-5 | Polyoxyethylene stearylamine | 20 | 30 | 31 | 9.1 | 141 |
| Ex. 13 | Prod. Ex. 19 | A-2 | a2-6 | Polyoxyethylene oleylamine | 15 | 30 | 39 | 9.1 | 145 |
| Ex. 14 | Prod. Ex. 20 | A-2 | a2-7 | Polyoxyethylene lauryl monoethanolamide | 10 | 30 | 110 | 9.3 | 140 |
| Comp.Ex. 4 | Prod. Ex. 21 | A-2 | a2-8 | Polyoxyethylene laurylamine | 7 | 30 | 16 | 9.2 | 103 |
| Comp.Ex. 5 | Prod. Ex 22 | A-2 | a2-9 | Polyoxyethylene oleylcetylether | 15 | 30 | 15 | 8.5 | 122 |

| | Production Example | Modified olefin | Aqueous dispersion | Type of emulsifier | | Properties and state of aqueous dispersion | | | |
|---|---|---|---|---|---|---|---|---|---|
| | | | | Emulsifier | Number of moles of EO | Solids content | Viscosity | pH | Particle size |
| Comp.Ex. 6 | Prod. Ex 23 | A-3 | a3-1 | Polyoxyethylene laurylamine | 10 | 30 | 24 | 9.2 | 162 |

Production Example 14

100 parts by mass of the modified polyolefin (A-2), 15 parts by mass of polyoxyethylene laurylamine in which the number of moles of EO added was 10 as an emulsifier, 300 parts by mass of ion-exchanged water, 30 parts by mass of tetrahydrofuran, and 50 parts by mass of toluene were placed in a flask equipped with a stirrer. The mixture was heated to 90°C, and then dissolved by heating at the same temperature for 1 hour. Next, 1.5 parts by mass of N,N-dimethylethanolamine was added, and the mixture was stirred at the same temperature for 1 hour. Subsequently, the mixture was gradually cooled to 40°C over 1 hour, and the organic solvent was distilled off under a reduced pressure of 91 kPa. A white cloudy maleic anhydride-modified chlorinated polyolefin aqueous dispersion (a2-1) was thus obtained. The aqueous dispersion (a2-1) had a solids concentration of 30 mass%, a viscosity of 94 mPa•s at 25°C, a pH of 9.2, and an average particle size of 142 nm.

Production Examples 15 to 20

The aqueous dispersions of Production Examples 15 to 20 listed in Table 1 were obtained in the same manner as in Production Example 14, except that the emulsifier was changed for each Production Example.

Production Example 21

The aqueous dispersion of Production Example 21 listed in Table 1 was obtained in the same manner as in Production Example 14, except that the emulsifier was changed, and the amount of the emulsifier added was changed to 20 parts by mass.

Production Example 22

The aqueous dispersion of Production Example 22 listed in Table 1 was obtained in the same manner as in Production Example 14, except that the emulsifier was changed.

Production Example 23

A white cloudy maleic anhydride-modified polyolefin aqueous dispersion (a3-2) was obtained in the same manner as in Production Example 22, except that the emulsifier was changed to 15 parts by mass of polyoxyethylene laurylamine in which the number of moles of EO added was 10. The aqueous dispersion (a3-2) had a solids concentration of 30 mass%, a viscosity of 24 mPa•s at 25°C, a pH of 9.2, and an average particle size of 162 nm.

Measurement of Water Contact Angle

Aqueous dispersion compositions were obtained by adding 50 parts by weight of water and 2 parts by weight of an alkali-soluble emulsion thickener (ASE-60 produced by Rohm and Haas) to 100 parts by weight of each of the aqueous dispersions obtained in Production Examples 4 to 23 above while stirring. The resulting products were each applied to a commercially available polypropylene substrate (produced by Nippon Testpanel Co., Ltd., 100 mm × 100 mm × 3 mm) with a spray gun so that the dry film thickness was 10 μm, followed by drying by heating at 80°C for 10 minutes to obtain test specimens for evaluation. Immediately after the test specimens were allowed to stand and cooled at 20°C for 10 minutes (humidity: 50%), about 1 μl of pure water was added dropwise from a microsyringe with an inner diameter of 0.1 mm using a contact angle meter (CX-150 produced by Kyowa Interface Science Co., Ltd.), and the contact angle after 1 minute was measured.

Example 1

Pigment Dispersion

4 parts by mass of water-soluble acrylic resin, 2 parts by mass of conductive carbon black, 36 parts by mass of rutile-type titanium oxide, and 70 parts by mass ion-exchanged water were added and stirred for 30 minutes. Thereafter, dispersion was performed in a bead mill for 30 minutes. Subsequently, 5 parts by mass of a urethane-associative thickener and 2 parts by mass of a leveling agent were added thereto to thus obtain a pigment dispersion.

12

Preparation of Paint composition

38 parts by mass of the pigment dispersion and 21 parts by mass of a polyester polyurethane dispersion (produced by Sanyo Chemical Industries, Ltd., UXA-310, solids content: 38%) were added to 14 parts by mass of the aqueous dispersion obtained in Production Example 4. The mixture was stirred for 10 minutes with a disper mixer. Subsequently, 1.0 parts by mass of BYK-349 as a leveling agent and 2 parts by weight of an alkali-soluble emulsion thickener (ASE-60 produced by Rohm and Haas) were added thereto dropwise and stirred for 15 minutes to obtain a paint composition. The paint composition was evaluated as follows. Tables 2 and 3 show the results.

Evaluation of Slippage

The paint composition was applied to a commercially available polypropylene substrate (produced by Nippon Testpanel Co., Ltd., 150 mm × 1000 mm × 3 mm) with a spray gun so that the dry film thickness was 10 $\mu$m, followed by drying by heating at 80°C for 10 minutes to prepare an adherend for evaluation. Next, the adherend was placed vertically in an atmosphere set at an ambient temperature of 23°C and a relative humidity of 50%; and a commercially available aqueous base paint (Retan PG WB Eco produced by Kansai Paint Co., Ltd.) was applied with a spray gun so that the dry film thickness was 20 $\mu$m. Thereafter, the test specimen was allowed to stand in the same environment for 1 minute after the application, and then allowed to stand in a vertical position in a drying furnace at 40°C for 5 minutes. Subsequently, after the test specimen was allowed to stand in a vertical position in a drying furnace at 80°C for 15 minutes, the test specimen was collected, and slippage of the resulting coating film was evaluated by visual confirmation and by measurement of the film thickness according to the following criteria.

Evaluation Criteria

A: No exposure of the primer was observed with no wrinkling of the coating film.
B: No exposure of the primer was observed, but wrinkling was observed as a result of slippage of the coating film.
C: Exposure of the primer was observed as a result of slipping off of the base coating.

Evaluation of Paint Appearance

The paint composition was applied to a commercially available polypropylene substrate (produced by Nippon Testpanel Co., Ltd., 150 mm × 1000 mm × 3 mm) with a spray gun so that the dry film thickness was 10 $\mu$m, followed by drying by heating at 80°C for 10 minutes to prepare an adherend for evaluation. Next, the adherend was placed vertically in an atmosphere set at an ambient temperature of 23°C and a relative humidity of 50%; and a commercially available aqueous base paint (Retan PG WB Eco produced by Kansai Paint Co., Ltd.) was applied with a spray gun so that the dry film thickness was 20 $\mu$m. Thereafter, the test specimen was allowed to stand in the same environment for 1 minute after the application, and then allowed to stand in a vertical position in a drying furnace at 40°C for 5 minutes. Subsequently, after the test specimen was allowed to stand in a vertical position in a drying furnace at 80°C for 15 minutes, the test specimen was collected, and the coating film appearance of the resulting test specimen was evaluated by visual observation according to the following criteria.

Evaluation Criteria

A: The film was entirely uniform and smooth.
B: Orange peel was slightly observed, but the entire film was almost uniform.
C: Orange peel was partly observed.
D: Notable dents were observed.

Evaluation of Water Resistance

The paint composition was applied by spraying to a polypropylene plate (produced by Nippon Testpanel Co., Ltd.) that had been cleaned with isopropyl alcohol so that the dry film thickness was 10 $\mu$m. After drying at 80°C for 3 minutes, a 2K urethane paint (Retan PG White III produced by Kansai Paint Co., Ltd.) was applied by spraying to form a protective film with a thickness of 40 to 50 $\mu$m. After drying at 80°C for 30 minutes, the resulting product was allowed to stand in an atmosphere at a temperature of 25°C and a relative humidity of 60% for 24 hours to obtain a test piece. Each test piece was immersed in warm water at 40°C for 10 days. After immersion, the appearance of the coating film surface was observed, and the evaluation for adhesion was performed. Table 2 shows the results. The evaluation for adhesion was performed according to the following criteria.

Evaluation Criteria

A: No blistering or other defects were observed in appearance, and the adhesion evaluation was scored 10 points.
B: No blistering or other defects were observed in appearance, and the adhesion evaluation was scored 4 to 9 points.
C: No blistering or other defects were observed in appearance, and the adhesion evaluation was scored 1 to 3 points.
D: Blistering was observed in appearance, or the adhesion evaluation was scored 0 points.

Evaluation of Adhesion

The test piece was cut using a sharp cutter knife to form a grid of 2-mm wide squares (10 × 10). Cellophane adhesive tape (produced by Nichiban Co., Ltd.) was applied to the portion of the grid pattern, and the tape was peeled off rapidly at an angle of 60°. This operation was repeated 10 times. The test piece was scored 10 points when no change was observed in the paint surface after the operation was repeated 10 times. The test piece was scored 9 points when peeling off occurred at the 10th operation, and then the test piece was scored 8, 7, and 6 points as the number of operations repeated until peeling off occurred decreased. The test piece was scored 0 points when peeling off occurred at the first operation.

Storage Stability

The produced paint composition (200 g) was sealed in a polypropylene container and stored at 40°C for 10 days. The viscosity after storage was then measured with a rotational viscometer (TVB-10M produced by Toki Sangyo Co., Ltd.). The change in the viscosity between before and after storage was measured.

Evaluation Criteria

A: The viscosity change between before and after storage was less than 5%.
B: The viscosity change between before and after storage was 5% or more and less than 10%.
C: The viscosity change between before and after storage was 11% or more and less than 20%.
D: The viscosity change between before and after storage was 20% or more.

Table 2

| | | Ex 1 | Ex. 2 | Ex. 3 | Ex. 4 | Ex. 5 | Ex. 6 | Ex. 7 | Ex. 8 | Ex. 9 | Ex 10 | Ex. 11 | Ex. 12 | Ex. 13 | Ex. 14 |
|---|---|---|---|---|---|---|---|---|---|---|---|---|---|---|---|
| Aqueous dispersion (a) | Production Example | Prod. Ex. 4 | Prod. Ex. 5 | Prod. Ex. 6 | Prod. Ex. 7 | Prod. Ex. 8 | Prod. Ex. 9 | Prod. Ex. 10 | Prod. Ex 14 | Prod. Ex. 15 | Prod. Ex. 16 | Prod. Ex. 17 | Prod. Ex. 18 | Prod. Ex. 19 | Prod. Ex. 20 |
| | Modified polyolefin (A) | A-1 | A-1 | A-1 | A-1 | A-1 | A-1 | A-1 | A-2 | A-2 | A-2 | A-2 | A-2 | A-2 | A-2 |
| | Type of emulsifier | Alkylamine | Alkylamine | Alkylamine | Alkylamine | Alkylamine | Alkylamine | Alkylamide | Alkylamine | Alkylamine | Alkylamine | Alkylamine | Alkylamine | Alkylamine | Alkylamide |
| | Number of moles of EO in emulsifier | 10 | 15 | 30 | 15 | 20 | 15 | 10 | 10 | 15 | 30 | 15 | 20 | 15 | 10 |
| | Alkyl chain in emulsifier | Lauryl | Lauryl | Lauryl | Stearyl | Stearyl | Oleyl | Lauryl | Lauryl | Lauryl | Lauryl | Stearyl | Stearyl | Oleyl | Lauryl |
| | Water contact angle | 69.2 | 72.5 | 74.6 | 65.9 | 76.2 | 68.9 | 68.4 | 43.92 | 47.5 | 52.1 | 46.1 | 49.1 | 45.1 | 412 |
| Evaluation result | Coating film evaluation | Slippage | A | A | A | A | A | A | A | A | A | A | A | A | A | A |
| | | Paint appearance | B | B | B | B | B | B | B | B | A | B | A | B | A | B |
| | | Water resistance | A | A | B | A | A | A | A | A | A | B | A | A | A | A |
| | Paint stability | 40°C for 10 days | B | B | B | B | B | B | B | B | B | B | B | B | B | B |

Table 3

| | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|
| Aqueous dispersion (a) | Production Example | Prod. Ex. 11 | Prod. Ex. 12 | Prod. Ex. 13 | Prod. Ex. 21 | Prod. Ex. 22 | Prod. Ex. 23 |
| | Modified polyolefin (A) | A-1 | A-1 | A-1 | A-2 | A-2 | A-3 |
| | Type of emulsifier | Alkylamine | Alkylamine | Alkylether | Alkylamine | Alkylether | Alkylamine |
| | Number of moles of EO in emulsifier | 7 | 7 | 30 | 7 | 15 | 10 |
| | Alkyl chain in emulsifier | Lauryl | Stearyl | Ethylhexyl | Lauryl | Oleylcetyl | Lauryl |
| | Water contact angle | 25.4 | 38.3 | 20 | 23.2 | 22.1 | 38.2 |
| Evaluation result | Coating film evaluation — Slippage | C | B | C | C | C | B |
| | Coating film evaluation — Paint appearance | D | D | C | C | C | C |
| | Coating film evaluation — Water resistance | B | B | D | B | C | D |
| | Paint stability — 40°C for 10 days | B | D | B | D | B | B |

Industrial Applicability

The aqueous dispersion composition of the present invention when used as a primer for polypropylene substrates is capable of suppressing paint defects, such as sagging and slippage of the base coating that occur after preheating, and providing a smooth coating film with excellent appearance. The aqueous dispersion composition of the present invention can thus contribute to the reduction of the percentage of paint defects and the reduction of disposal or repair costs in the aqueous paint systems for plastics.

**Claims**

1. An aqueous dispersion comprising an acid-modified polyolefin resin (A), a nitrogen-containing non-ionic emulsifier (B), and water,
   wherein the acid-modified polyolefin resin (A) is a propylene-$\alpha$-olefin copolymer having a butene content of 2 to 35 mass% in a polyolefin component, and wherein a coating film after baking at 80°C has a pure water contact angle of 40° to 90°.

2. The aqueous dispersion according to claim 1, wherein the acid-modified polyolefin resin (A) has a weight average molecular weight of 50,000 to 150,000.

3. The aqueous dispersion according to claim 1 or 2,
   wherein the acid-modified polyolefin resin (A) is chlorinated.

4. The aqueous dispersion according to any one of claims 1 to 3, wherein the nitrogen-containing non-ionic emulsifier (B) has a polyoxyethylene structure, and wherein the number of moles of ethylene oxide (the number of ethylene oxide units per molecule) is 10 or more and 30 or less.

5. The aqueous dispersion according to any one of claims 1 to 4, wherein the nitrogen-containing non-ionic emulsifier (B) has a structure in which an alkyl group is present, and wherein the number of carbon atoms in the alkyl is 10 or more.

6. The aqueous dispersion according to any one of claims 1 to 5, which has a Z-average particle size in the range of 80 nm to 250 nm.

7. A paint comprising the aqueous dispersion of any one of claims 1 to 6.

8. An adhesive comprising the aqueous dispersion of any one of claims 1 to 6.

9. A coating film of the aqueous dispersion of any one of claims 1 to 6 from which an aqueous medium is removed.

10. A laminate comprising a layer formed of the paint or the adhesive of claim 7 or 8.

<div align="center">

**INTERNATIONAL SEARCH REPORT**

</div>

| | |
|---|---|
| | International application No. |
| | **PCT/JP2022/008954** |

| | |
|---|---|
| **A.** | **CLASSIFICATION OF SUBJECT MATTER** |

*C08L 23/26*(2006.01)i; *C08L 23/28*(2006.01)i; *C08L 71/02*(2006.01)i; *C09D 7/63*(2018.01)i; *C09D 123/26*(2006.01)i; *C09D 123/28*(2006.01)i; *C09J 11/06*(2006.01)i; *C09J 123/26*(2006.01)i; *C09J 123/28*(2006.01)i
FI:   C08L23/26; C08L71/02; C09D123/26; C09D7/63; C09D123/28; C09J123/26; C09J11/06; C09J123/28; C08L23/28

According to International Patent Classification (IPC) or to both national classification and IPC

| | |
|---|---|
| **B.** | **FIELDS SEARCHED** |

Minimum documentation searched (classification system followed by classification symbols)

    C08L23/26; C08L23/28; C08L71/02; C09D7/63; C09D123/26; C09D123/28; C09J11/06; C09J123/26; C09J123/28

Documentation searched other than minimum documentation to the extent that such documents are included in the fields searched

    Published examined utility model applications of Japan 1922-1996
    Published unexamined utility model applications of Japan 1971-2022
    Registered utility model specifications of Japan 1996-2022
    Published registered utility model applications of Japan 1994-2022

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | JP 6-256592 A (NIPPON PAPER IND. CO., LTD.) 13 September 1994 (1994-09-13) claims, paragraphs [0037], [0055], [0056], [0058]-[0071] | 1, 3-10 |
| A | | 2 |

☐ Further documents are listed in the continuation of Box C.    ☑ See patent family annex.

| | |
|---|---|
| *    Special categories of cited documents: | "T"   later document published after the international filing date or priority date and not in conflict with the application but cited to understand the principle or theory underlying the invention |
| "A"  document defining the general state of the art which is not considered to be of particular relevance | "X"   document of particular relevance; the claimed invention cannot be considered novel or cannot be considered to involve an inventive step when the document is taken alone |
| "E"  earlier application or patent but published on or after the international filing date | |
| "L"  document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"  document referring to an oral disclosure, use, exhibition or other means | "&"   document member of the same patent family |
| "P"  document published prior to the international filing date but later than the priority date claimed | |

| Date of the actual completion of the international search | Date of mailing of the international search report |
|---|---|
| **22 April 2022** | **17 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/008954**

| Patent document cited in search report | | | Publication date (day/month/year) | Patent family member(s) | | | Publication date (day/month/year) |
|---|---|---|---|---|---|---|---|
| JP | 6-256592 | A | 13 September 1994 | US | 5534577 | A | |
| | | | | claims, column 12, lines 35-42, trial productions 2, 3, examples, tables 1, 2 | | | |
| | | | | US | 5559176 | A | |
| | | | | US | 5563195 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3435469 B
- WO 2010018863 A